(19) Europäisches Patentamt
European Patent Office
Office européen des brevets

(11) Veröffentlichungsnummer: **0 260 709 B1**

(12) **EUROPÄISCHE PATENTSCHRIFT**

(45) Veröffentlichungstag der Patentschrift: **24.07.91**

(51) Int. Cl.$^5$: **C08G 73/14**

(21) Anmeldenummer: **87113689.1**

(22) Anmeldetag: **18.09.87**

(54) **Neue lösliche und/oder schmelzbare Polyamidimid-Polyimid-Blockcopolymere.**

(30) Priorität: **19.09.86 AT 2514/86**

(43) Veröffentlichungstag der Anmeldung:
**23.03.88 Patentblatt 88/12**

(45) Bekanntmachung des Hinweises auf die Patenterteilung:
**24.07.91 Patentblatt 91/30**

(84) Benannte Vertragsstaaten:
**AT BE CH DE ES FR GB IT LI NL SE**

(56) Entgegenhaltungen:
**FR-A- 2 197 034**

**CHEMICAL ABSTRACTS, Band 104, Nr. 16, 21. April 1986, Seite 35, Zusammenfassung Nr. 130783j, Columbus, Ohio, US; & JP-A-60 177 023 (IDEMITSU KOSAN CO., LTD) 11-09-1985**

**CHEMICAL ABSTRACTS, Band 100, Nr. 22, 28. Mai 1984, Seite 17, Zusammenfassung Nr. 175555v, Columbus, Ohio, US; & JP-A-58 222 112 (MITSUI TOATSU CHEMICALS, INC.) 23-12-1983**

(73) Patentinhaber: **Chemie Linz Gesellschaft m.b.H.**
**St.Peter-Strasse 25**
**A-4021 Linz(AT)BE CH DE ES FR GB IT LI NL SE AT**

(72) Erfinder: **Greber, Gerd, Dr.**
**Anzengruberstrasse 11**
**A-2540 Bad Vöslau(AT)**
Erfinder: **Gruber, Heinrich, Dr.**
**Cottagegasse 82**
**A-1190 Wien(AT)**
Erfinder: **Wimmer, Wolfgang, Dr.**
**Eslarngasse 18/2/9**
**A-1030 Wien(AT)**

(74) Vertreter: **Kunz, Ekkehard, Dr.**
**Chemie Holding AG Patentwesen St. Peter-Strasse 25**
**A-4021 Linz(AT)**

EP 0 260 709 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

CHEMICAL ABSTRACTS, Band 100, Nr. 1, 2. Juli 1984, Seite 34, Zusammenfassung Nr. 69238j, Columbus, Ohio, US; & JP-A-58 154 729 (MITSUI TOATSU CHEMICALS INC.) 14-09-1983

CHEMICAL ABSTRACTS, Band 98, Nr. 4, 24. Januar 1983, Seite 12, Zusammenfassung Nr. 17225y, Columbus, Ohio, US; & JP-A-57 94 016 (MITSUI TOATSU CHEMICALS INC.) 11-06-1982

Dr. K.-U. BUELER , SPEZIALPASTE , AKADEMIE-VERLAG, BERLIN 1978, SEHEN 396-411,740-749,756

## Beschreibung

Die Erfindung beschreibt lösliche und/oder schmelzbare thermostabile Polyamidimid-Polyimid-Blockcopolymre (PAI-PI-BCP) und Verfahren zu deren Herstellung.

Die bis heute technisch wichtigsten thermostabilen Polymere sind die vollaromatischen Polyimide, die extreme Thermostabilitäten aufweisen, aber weder schmelzbar noch löslich und daher nur aufwendig und teuer zu verarbeiten sind (J. Appl. Pol. Sci. Vol. 28, 2069 - 2081 (1983)). Die etwas weniger thermostabilen aromatischen Polyamide sind ebenfalls unschmelzbar und in den meisten organischen Lösungsmitteln unlöslich oder nur wenig löslich, sodaß ihre Verarbeitung aus Lösung zu Fasern oder Folien mit großen Schwierigkeiten verbunden ist (Encyclopedia of Polymer Science and Technology, Suppl. Vol 2, (1977) S 84 - 112). Alle Versuche zur Entwicklung von schmelzbaren oder besser löslichen thermostabilen Polymeren - z. B. durch Veränderung der chemischen Struktur durch Einbau von flexiblen Kettenelementen ($-CH_2-$,-O-,-S-,-CO-) oder sterisch anspruchsvollen Gruppen -führten bisher zu einer meist beträchtlichen Einbuße an Thermostabilität. Hierher gehören auch die technisch wichtigen Polyamidimide und Polyesterimide, in denen aromatische Amid- und Imid- bzw. Ester- und Imidgruppen statistisch angeordnet sind, die meist thermoplastische Eigenschaften besitzen, aber ebenfalls eine geringere Thermostabilität aufweisen (J. Pol. Sci., Polymer Chemistry Edition, Vol. 12, 589 - 601(1974)). Blockcopolymere, die aus Polyimid- und Polyamid-Einheiten aufgebaut sind, werden in FR-A-2,197,034 beschrieben. Aufgrund der Polyamid-Einheitan in der Polymerkette ist zwar ihre Verarbeitbarkeit möglich, ihre Thermostabilität ist jedoch in vielen Fällen nicht ausreichend.

Die eigentliche Problemlösung auf dem Gebiet der thermostabilen Polymeren liegt also noch immer auf der Entwicklung von Produkten mit hoher Thermostabilität und gleichzeitig guter Verarbeitbarkeit.

Aufgabe der vorliegenden Erfindung war es, neue thermostabile Polymere zu entwicklen, die bei hoher Thermostabilität löslich und/oder schmelzbar und somit nach herkömmlichen Methoden verarbeitbar sind.

Es wurde nun gefunden, daß diese Aufgabe mit Hilfe von Polyamidimid-Polyimid-Blockcopolymeren, in denen die Bausteine nicht statistisch sondern in Blockform angeordnet sind, gelöst werden kann.

Gegenstand der vorliegenden Erfindung sind demnach lösliche und/oder schmelzbare Polyamidimid-Polyimid-Blockcopolymere der allgemeinen Formel I des Formelblattes, worin

| | |
|---|---|
| n | eine ganze Zahl von 1 bis 200, |
| PAI | einen Polyamidimid-Block der allgemeinen Formel II des Formelblattes und |
| PI | einen Polyimid-Block der allgemeinen Formel III des Formelblattes darstellen, wobei |
| x und y | unabhängig voneinander eine ganze Zahl von 1 bis 80, |
| R | divalente aromatische Reste der Formeln IV bis 1X des Formelblattes oder Gemische derselben, |
| Ar | tetravalente aromatische Reste, |
| Ar' | trivalente aromatische Reste, |
| m | eine ganze Zahl von 1 bis 4 bedeuten. |

Erfindungsgemäß kommen alle bekannten tri- oder tetravalenten aromatischen Reste Ar' und Ar in Frage, die sich insbesondere von den entsprechenden Tri-oder Tetracarbonsäuren bzw. ihren Derivaten, wie beispielsweise Anhydriden, Estern oder Säurechloriden ableiten. Beispiele dafür sind Reste von Aromaten, kondensierten Aromaten, Heteroaromaten, sowie deren Derivaten. Bevorzugt sind Polyamidimid-Polyimid-Blockcopolymere der allgemeinen Formel I des Formelblattes, in denen als tetravalenter aromatischer Rest ein Benzol- oder Benzophenonrest, bzw in denen als trivalenter aromatischer Rest ein Benzolrest enthalten ist. Es ist auch möglich, Gemische verschiedener aromatischer Reste Ar bzw. Gemische verschiedener aromatischer Reste Ar' zu verwenden.

Die erfindungsgemäßen Polyamid-Polyimid-Blockcopolymere können dadurch hergestellt werden, daß man

a) aromatische Tricarbonsäuren oder deren reaktive Derivate mit Diaminen der allgemeinen Formel X des Formelblattes zu einem Polyamidamidsäure-Block der allgemeinen Formel XI des Formelblattes umsetzt,

b) aromatische Tetracarbonsäuren oder deren reaktive Derivate mit Diaminen der allgemeinen Formel X des Formelblattes zu einem Polyamidsäure-Block der allgemeinen Formel XII des Formelblattes umsetzt,

c) die Polyamidamidsäure-Blöcke der allgemeinen Formel XI des Formelblattes mit den Polyamidsäure-Blöcken der allgemeinen Formel XII des Formelblattes, bevorzugt in stöchiometrischem Verhältnis, miteinander umsetzt, und das zunächst entstehende Polyamidamidsäure-Polyamidsäure-Blockcopolymer chemisch oder thermisch cyclisiert,

wobei die in den allgemeinen Formeln X, XI und XII verwendeten Symbole die oben angegebene Bedeutung besitzen.

Polyamidamidsäure-Blöcke mit Amino-Endgruppen der allgemeinen Formel XI des Formelblattes werden bevorzugt dadurch erhalten, daß man als aromatisches Tricarbonsäurederivat beispielsweise Trimellitsäureanhydridchlorid verwendet, und dieses mit überschüssigem Diamin der allgemeinen Formel X umsetzt. Die Länge der Blöcke kann in einfacher Weise innerhalb weiter Grenzen durch das vorgegebene Molverhältnis der Reaktionspartner - d. h. durch den Überschuß an Diamin - variiert werden. Zur Synthese der Polyamidamidsäure-Blöcke gemäß Formel XI werden außer Trimellitsäureanhydridchlorid bevorzugt auch Trimellitsäuremethyl-, -ethyl- oder -isopropylester bzw. Trimellitsäureanhydrid eingesetzt. Grundsätzlich eignen sich hierfür aber auch andere bekannte Tricarbonsäuremonoanhydride oder ihre organischen und anorganischen Ester.

Die Polyamidsäure-Blöcke mit Anhydrid-Endgruppen der allgemeinen Formel XII des Formelblattes, werden bevorzugt dadurch erhalten, daß man ein Diamin der allgemeinen Formel X des Formelblattes, mit Benzophenontetracarbonsäuredianhydrid im Überschuß umsetzt. Die Länge der Blöcke kann ebenfalls durch das vorgegebene Molverhältnis der Reaktionspartner -d. h. durch den Überschuß an Tetracarbonsäurederivat - variiert werden. Zur Synthese der Polyamidsäure-Blöcke gemäß Formel XII des Formelblattes wird neben Benzophenontetracarbonsäuredianhydrid bevorzugt Pyromellitsäuredianhydrid verwendet. Erfindungsgemäß können aber auch andere, aus der Chemie der thermostabilen Polymere bekannten Tetracarbonsäuredianhydride eingesetzt werden.

Die Herstellung der Polyamidamidsäure-Blöcke gemäß Formel XI des Formelblattes und der Polyamidsäure-Blöcke gemäß Formel XII des Formelblattes kann in an sich bekannter Weise in stark polaren Lösungsmitteln, wie z. B. Dimethylformamid (DMF), Dimethylacetamid (DMA), N-Methylpyrollidon (NMP), Dimethylsulfoxid (DMSO), Tetramethylharnstoff oder Hexamethylphosphorsäuretriamid erfolgen. Die Reaktionstemperatur kann je nach verwendeten Ausgangsstoffen und gewünschtem Endprodukt innerhalb eines weiten Bereiches schwanken. Bei Verwendung der reaktiven Anhydride bzw. Anhydridchloride liegen die Temperaturen zwischen -30 und +30° C. Mit den weniger reaktiven Säuren bzw. Säureestern benötigt man Reaktionstemperaturen bis 150° C.

Die Blöcke gemäß Formel XI und XII des Formelblattes besitzen bevorzugt mittlere Molekulargewichte von 1 000 bis 20 000, die inhärenten Viskositäten liegen bevorzugt zwischen 0,1 und 4,0 dl/g. Das angestrebte Molekulargewicht der Blöcke wird durch Endgruppenanalyse nach Einführung von Halogen- z. ß. durch Umsetzung der Blöcke XI mit 4-Chlorbenzaldehyd bzw. Umsetzung der Blöcke XII mit 4-Bromanilin - überprüft, wobei die erwarteten Werte bestätigt werden. Zur Herstellung der Blöcke XI und XII können sowohl reine Diamine der Formel X des Formelblattes als auch deren Gemische in beliebiger Zusammensetzung eingesetzt werden, wodurch Blockcopolymere mit abgestufter Thermostabilität zwischen etwa 420 und 490° C und Glastemperaturen von etwa 210 bis 300° C hergestellt werden können, die löslich und schmelzbar sind. Gleichfalls können zur Herstellung der Blöcke XI und XII Gemische beliebiger Zusammensetzung von Tri- bzw. von Tetracarbonsäurederivaten verwendet werden.

Zur Synthese der Polyamidamidsäure-Polyamidsäure-Blockcopolymere werden vorteilhafterweise stöchiometrische Mengen der in den genannten polaren Lösungsmitteln gelösten Polyamidamidsäure- und Polyamidsäure-Blöcke vermischt und so lange gerührt, bis die inhärente Viskosität ein Maximum erreicht hat und die Polyaddition beendet ist. Wie bei allen Polyadditionen ist das Erreichen ausreichender Viskositäten - also Molekulargewichte - von der exakten Stöchiometrie der reaktiven Gruppen und damit vom Reinheitsgrad der eingesetzten Komponenten abhängig. Die Reaktionstemperaturen liegen zwischen -30 und +30° C, bevorzugt bei 0 bis 10° C. Die Konzentration der Reaktionspartner wird zweckmäßigerweise zwischen 10 und 40 % gehalten, für höhere Konzentrationen stellt die notwendige Durchmischung und Kühlung ein Limit dar. Die resultierenden Lösungen der Polyamidamidsäure-Polyamidsäure-Blockcopolymere können in bekannter Weise in Folien und Fasern übergeführt und anschließend thermisch unter Wasserabspaltung zu Polyamidimid-Polyimid-Blockcopolymeren cyclisiert werden, wobei zum Schluß für eine quantitative Cyclisierung Temperaturen bis 300° C notwendig sein können. Grundsätzlich sind solche Lösungen auch zur Laminierung einsetzbar, wobei jedoch das abgespaltene Wasser stören kann, so daß man hier zweckmäßigerweise den großen Vorteil der erfindungsgemäßen Blockcopolymeren ausnützt, daß sie auch in der cyclisierten Form noch gut in polaren Lösungsmitteln löslich sind.

Will man die Blockcopolymeren dagegen in Pulverform isolieren - etwa als Preßpulver zur thermoplastischen Verformung - dann kann man chemisch mit Hilfe wasseraufnehmender Agentien, beispielsweise Essigsäureanhydrid, gegebenenfalls in Gegenwart von Pyridin oder anderen Basen cyclisieren. Die so erhaltenen Polyamidimid-Polyimid-Blockcopolymere können nun entweder unter Druck thermoplastisch verformt werden oder in polaren Lösungsmitteln gelöst werden. Aus solchen Lösungen kann man Folien, Fasern und Laminate herstellen, wobei der große Vorteil darin besteht, daß nach Entfernen des Lösungsmittels bereits fertig cyclisierte Polyimid- und Polyamidimid-Blöcke vorliegen, also kein Wasser mehr abgespalten werden muß, was vor allem für Laminierungen von großer Bedeutung ist.

Die Thermostabilitäten der erfindungsgemäßen Polyamidimid-Polyimid-Blockcopolymeren liegen je nach Zusammensetzung bei etwa 420 bis 490° C, gemessen in Luft mit thermogravimetrischer Analyse (TGA) bei einer Aufheizgeschwindigkeit von 10° C/min (5 % Gewichtsverlust), wobei die schwefelhaltigen Produkte die besten Werte aufweisen. Die Glastemperaturen liegen zwischen etwa 210 und 300° C. Die Blockcopolymeren weisen auch ausgezeichnete mechanische Eigenschaften auf (Zugfestigkeit ca. 100 MPa, E-Modul ca. 1500 bis 3800 MPa, Reißdehnung ca. 10%), sind in der cyclisierten Form in den oben genannten polaren Lösungsmitteln in Konzentrationen bis etwa 20 Gew.% löslich, und sind unter Druck thermoplastisch verformbar.

In den Beispielen und Tabellen wurden folgende Abkürzungen verwendet:

| | |
|---|---|
| PAAS | Polyamidamidsäure-Block |
| PAS | Polyamidsäure-Block |
| BCP | Blockcopolymer |
| TMACl | Trimellitsäureanhydridchlorid |
| $MG_{th}$ | theoretisches Molekulargewicht, berechnet aus dem eingesetzten Molverhältnis der Reaktionspartner |
| BTDA | Benzophenontetracarbonsäuredianhydrid |
| $v_i$ | inhärente Viskosität, gemessen bei 25° C und einer Konzentration von 0,5 Gew% in DMA |
| DMA | Dimethylacetamid |
| MDA | 4,4-Methylendianilin |
| TDA | 2,4-Toluylendiamin |
| S1DA | 4,4-Diaminodiphenylsulfid |
| S2DA | p-Bis-(4-aminophenylthio)benzol |
| S4DA | p-Bis(p-(p-aminophenylthio)phenylthio)benzol |
| DS | 4,4-Diaminodiphenylsulfon |
| SSD | 1,4-Bis(4-aminophenylthio)diphenylsulfon |

Beispiel 1:

a) Herstellung eines Polyamidamidsäure-Blockes mit Amino-Endgruppen (Molekulargewicht 2100):
6,5523 g (0,0330 Mol) MDA werden in 50 ml wasserfreiem DMA gelöst und unter Rühren bei -15 bis -5° C portionenweise 5,7990 g (0,0275 Mol) TMACl in fester Form zugegeben. Nach einer Stunde Rühren bei -5° C und drei Stunden bei 20 bis 25° C wird bei 5 bis 10° C eine Lösung von 3,8 ml (0,0275 Mol) Triäthylamin in 24 ml wasserfreiem DMA zugetropft und eine Stunde bei 20° C gerührt. Das Triäthylaminhydrochlorid wird abfiltriert und mit 15 ml DMA gewaschen. Man erhält eine Lösung einer PAAS mit einer inhärenten Viskosität von 0,18 dl/g (0,5 Gew.% in DMA).

b) Herstellung eines Polyamidsäure-Blockes mit Anhydrid-Endgruppen (Molekulargewicht 2140):
8,0000 g (0,0248 Mol) BTDA werden in 20 ml wasserfreiem DMA suspendiert. Dann wird unter Rühren bei 5 - 20° C eine Lösung von 1,9690 g (0,0099 Mol) MDA und 1,2132 g (0,0099 Mol) TDA in 18 ml wasserfreiem DMA zugetropft, wobei das BTDA langsam in Lösung geht. Man erhält eine Lösung einer PAS mit einer inhärenten Viskosität von 0,14 dl/g (0,5 Gew.% in DMA).

c) Herstellung eines Polyamidamidsäure-Polyamidsäure-Blockcopolymeren:
Zu der nach Beispiel lb erhaltenen Lösung der Polyamidsäure mit Anhydrid-Endgruppen läßt man unter Stickstoff innerhalb von 10 Minuten bei 5 - 10° C die nach Beispiel 1a erhaltene Lösung der Polyamidamidsäure mit Amino-Endgruppen zutropfen. Nach 2 Stunden Rühren bei 20 - 25° C erhält man eine Lösung des Polyamidamidsäure-Polyamidsäure-Blockcopolymeren.

d) Herstellung einer Folie aus einem Polyamidimid-Polyimid-Blockcopolymer:
Erhöht man die Konzentration bei der Herstellung der Blockcopolymeren (vgl. Beispiel 1c) auf ca. 30 Gew.%, dann kann die erhaltene Polymerlösung direkt zur Folienherstellung verwendet werden. Hierzu wird die Polymerlösung mit Hilfe eines Folienziehgerätes (Messingrakel mit 0,8 mm Spalthöhe) auf eine Glasplatte aufgetragen und innerhalb von 24 Stunden langsam von 50° C bis 230° C bei 27 mbar erhitzt, wobei eine quantitative Cyclisierung erfolgt, wie aus dem IR-Spektrum der Folie zu ersehen ist.

e) Herstellung eines Preßpulvers aus einem Polyamidamidsäure-Polyamidsäure-Blockcopolymer:
Zur Herstellung eines Preßpulvers werden ca. 10 g der Polymerlösung eines Blockcopolymeren (vgl. Beispiel 1c) in 30 ml eines Gemisches aus 3 Volumenteilen Pyridin und 2 Volumenteilen Essigsäureanhydrid eingetropft, das Gemisch wird sodann während 20 Stunden bei ca. 25° C gerührt. Es entsteht eine gelbe, gallertartige Suspension. Diese wird z. B. in ein Gemisch aus je einem Volumenteil Wasser und Methanol getropft, und die entstehende Suspension möglichst mit einem "Turrax"-Mixer homogenisiert. Das entstandene gelbe Pulver wird abgenutscht und gründlich mit Methanol gewaschen. Dann wird das

Produkt während 16 Stunden bei 130 °C im Vakuumtrockenschrank gewichtskonstant getrocknet.

Beispiele 2 bis 24:

Analog den im Beispiel 1a bis e angegebenen Arbeitsvorschriften erhält man die in Tabelle 1 angegebenen Polyamidamidsäure-Blöcke, Polyamidsäure-Blöcke, Polyamidamidsäure-Polyamidsäure-Blockcopolymere und Folien bzw. Preßpulver aus Polyamidimid-Polyimid-Blockcopolymeren.

Tabelle 1

| Beispiel | PAAS-BLOCK MIT AMINO-ENDGRUPPEN | | PAS-BLOCK MIT ANHYDRID-ENDGRUPPEN | | PAAS PAS-BCP | PAI-PI-BCP |
|---|---|---|---|---|---|---|
| | TMACl wird umgesetzt mit Überschuß von | $MG_{th}$ | BTDA wird umgesetzt mit Unterschuß von | $MG_{th}$ | $v_i$ (dl/g) | Nr. |
| 1 | MDA | 2100 | MDA(1) + TDA(1) | 2300 | 0,53 | I |
| 2 | MDA | 9900 | MDA(1) + TDA(1) | 2300 | 0,78 | II |
| 3 | MDA | 2100 | TDA | 2100 | 0,60 | III |
| 4 | MDA | 9900 | TDA | 2100 | 0,55 | IV |
| 5 | MDA | 15100 | MDA | 2100 | 0,65 | V |
| 6 | MDA | 2100 | TDA(4) + S1DA(1) | 2200 | 0,43 | VI |
| 7 | MDA | 2100 | TDA(1) + S1DA(4) | 2400 | 0,80 | VII |
| 8 | MDA | 2100 | MDA(1) + S1DA(4) | 2500 | 0,52 | VIII |
| 9 | S1DA | 2200 | TDA(4) + MDA(1) | 2200 | 0,65 | IX |
| 10 | S1DA | 2200 | TDA(1) + MDA(4) | 2300 | 0,56 | X |
| 11 | S1DA | 2200 | S1DA | 2500 | 0,37 | XI |
| 12 | MDA | 2100 | TDA(1) + S2DA(1) | 2300 | 0,54 | XII |
| 13 | MDA | 2100 | TDA(1) + S2DA(4) | 2800 | 0,62 | XIII |
| 14 | MDA | 2100 | MDA(1) + S2DA(4) | 2800 | 0,47 | XIV |
| 15 | S2DA | 2800 | TDA(4) + MDA(1) | 2200 | 0,46 | XV |
| 16 | MDA | 2100 | TDA(4) + S4DA(1) | 2400 | 0,51 | XVI |
| 17 | MDA | 2100 | TDA(1) + S4DA(4) | 3400 | 0,71 | XVII |
| 18 | MDA | 2100 | MDA(1) + S4DA(4) | 3500 | 0,42 | XVIII |
| 19 | MDA | 2100 | MDA(1) + DS(4) | 2560 | 0,38 | XIX |
| 20 | MDA | 2100 | TDA(1) + DS(4) | 2500 | 0,27 | XX |
| 21 | MDA | 2100 | TDA(4) + DS(1) | 2200 | 0,38 | XXI |
| 22 | MDA | 2100 | TDA(1) + SSD(4) | 3200 | 0,26 | XXII |
| 23 | DS | 2360 | TDA(1) + MDA(4) | 2160 | 0,27 | XXIII |
| 24 | SSD | 3660 | TDA(4) + MDA(1) | 2160 | 0,34 | XXIV |

Tabelle 2: Thermische und mechanische Eigenschaften der PAI-PI-BCP

| Nr. | DIAMIN IM PAAS-BLOCK | DIAMIN IM PAS-BLOCK | $T_G$ (°C) | TGA (°C) | Zugfestigkeit (MPa) | E-Modul (MPa) | Reißdehnung (%) |
|---|---|---|---|---|---|---|---|
| I | MDA | MDA(1) + TDA(1) | 245 | 460 | 124 ± 8 | 2625 | 9 ± 3 |
| II | MDA | MDA(1) + TDA(1) | 270 | 440 | 107 ± 9 | 2786 | 8 ± 4 |
| III | MDA | TDA | 245 | 460 | 131 ± 12 | 3257 | 9 ± 1 |
| IV | MDA | TDA | 250 | 440 | 87 ± 19 | 3005 | 6 ± 3 |
| V | MDA | MDA | 250 | 430 | 98 ± 17 | 2737 | 5 ± 2 |
| VI | MDA | TDA(4) + S1DA(1) | | | 95 | 3000 | 10 |
| VII | MDA | TDA(1) + S1DA(4) | 280 ± 5 | 460 ± 5 | | 3800 | |
| VIII | MDA | MDA(1) + S1DA(4) | | | | 3200 | |
| IX | S1DA | TDA(4) + MDA(1) | | | 105 ± 5 | 3800 | 6 ± 2 |
| X | S1DA | TDA(1) + MDA(4) | 275 | 475 | | 3400 | |
| XI | S1DA | S1DA | | 470 | | 1500 | 18 ± 4 |
| XII | MDA | TDA(4) + S2DA(1) | 290 | 450 | | 2700 | |
| XIII | MDA | TDA(1) + S2DA(4) | | 485 | 105 ± 5 | 2200 | 10 ± 2 |
| XIV | MDA | MDA(1) + S2DA(4) | 260 ± 5 | 475 | | 3700 | |
| XV | S2DA | TDA(4) + MDA(1) | | | | 2900 | 7 |
| XVI | MDA | TDA(4) + S4DA(1) | 270 | 480 | 115 | 2400 | |
| XVII | MDA | TDA(1) + S4DA(4) | 230 | | 95 | 2500 | 7 ± 2 |
| XVIII | MDA | MDA(1) + S4DA(4) | 210 | 490 | 100 | 2900 | |
| XIX | MDA | MDA(1) + DS(4) | 277 | 447 | 100 ± 1 | 2666 | 8 ± 1 |
| XX | MDA | MDA(1) + DS(4) | 267 | 461 | 104 ± 3 | 3118 | 6 ± 1 |
| XXI | MDA | TDA(4) + DS(1) | 289 | 468 | 88 ± 9 | 1836 | 6 ± 1 |
| XXII | MDA | TDA(1) + SSD(4) | 282 | 437 | 88 ± 3 | 2871 | 4 ± 1 |
| XXIII | DS | TDA(1) + MDA(4) | 282 | 447 | 89 ± 21 | 3169 | 6 ± 1 |
| XXIV | SSD | TDA(4) + MDA(1) | 271 | 425 | 90 ± 6 | 2465 | 5 ± 1 |

## Patentansprüche

**Patentansprüche für folgende Vertragsstaaten : BE, CH, DE, FR, GB, GR, IT, LU, NL, SE**

**1.** Lösliche und/oder schmelzbare Polyamidimid-Polyimid-Blockcopolymere der allgemeinen Formel I

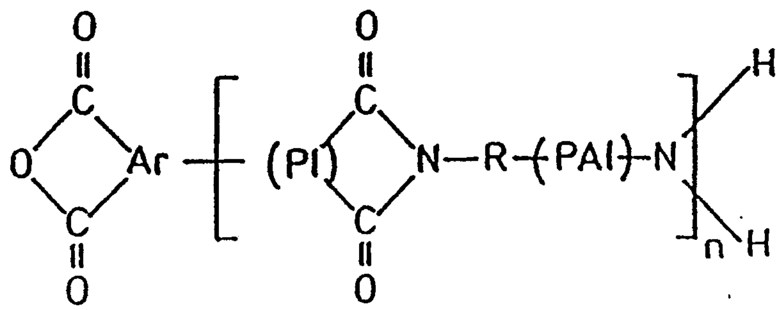

I

worin

n eine ganze Zahl von 1 bis 200,

PAI einen Polyamidimid-Block der allgemeinen Formel II

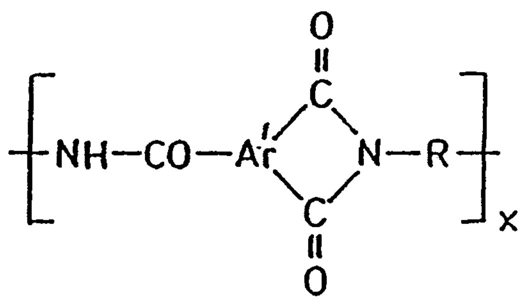

II

PI einen Polyimid-Block der allgemeinen Formel III

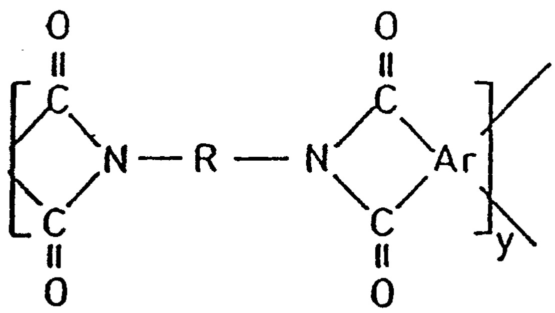

III

darstellen, wobei

x und y unabhängig voneinander eine ganze Zahl von 1 bis 80,

R divalente aromatische Reste der Formeln IV bis IX

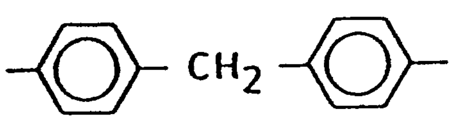

IV

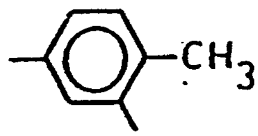

V

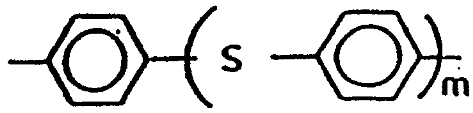

VI

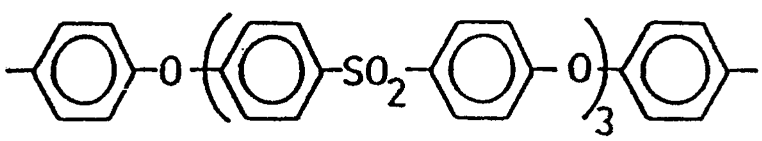

VII

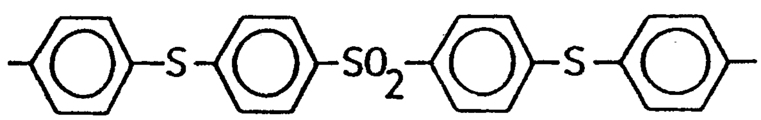

VIII

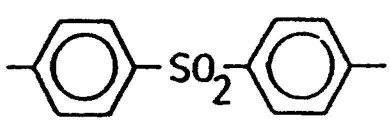

IX

oder Gemische derselben,

Ar tetravalente aromatische Reste

Ar' trivalente aromatische Reste und

m eine ganze Zahl von 1 bis 4 bedeuten.

2. Polyamidimid-Polyimid-Blockcopolymere nach Anspruch 1, dadurch gekennzeichnet, daß die tetravalenten aromatischen Reste Benzophenonreste darstellen.

3. Polyamidimid-Polyimid-Blockcopolymere nach Anspruch 1, dadurch gekennzeichnet, daß die tetravalenten aromatischen Reste Benzolreste darstellen.

4. Polyamidimid-Polyimid-Blockcopolymere nach einem der Ansprüche 1 - 3, dadurch gekennzeichnet, daß die trivalenten aromatischen Reste Benzolreste darstellen.

**5.** Verfahren zur Herstellung von löslichen und/oder schmelzbaren Polyamidimid-Polyimid-Blockcopolymeren der allgemeinen Formel I

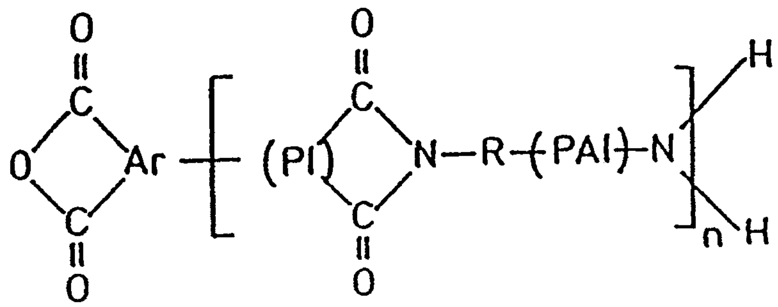

I

worin

n eine ganze Zahl von 1 bis 200,

PAI einen Polyamidimid-Block der allgemeinen Formel II

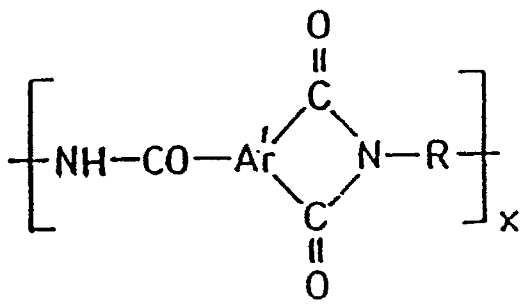

II

und

PI einen Polyimid-Block der allgemeinen Formel III

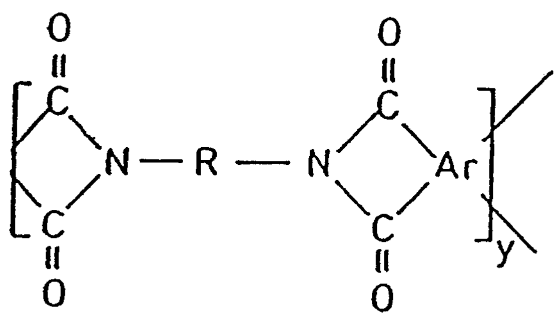

III

darstellen, wobei

x und y unabhängig voneinander eine ganze Zahl von 1 bis 80,

R divalente aromatische Reste der Formeln IV bis IX

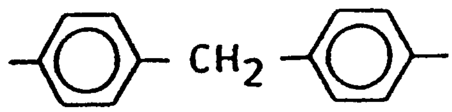

IV

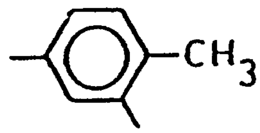

V

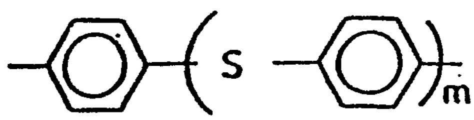

VI

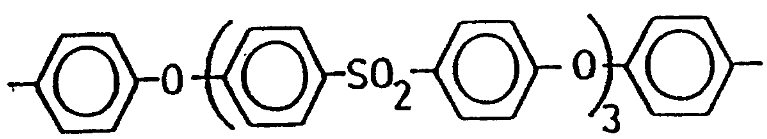

VII

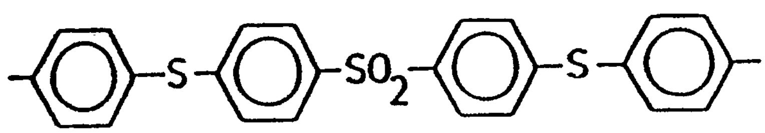

VIII

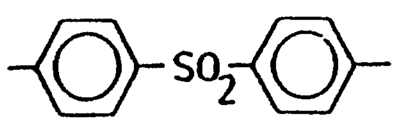

IX

oder Gemische derselben,

Ar tetravalente aromatische Reste

Ar' trivalente aromatische Reste und

m eine ganze Zahl von 1 bis 4 bedeuten,

dadurch gekennzeichnet, daß man

a) aromatische Tricarbonsäuren oder deren reaktive Derivate mit Diaminen der allgemeinen Formel X

$H_2N-R-NH_2$ X

zu einem Polyamidamidsäure-Block der allgemeinen Formel XI

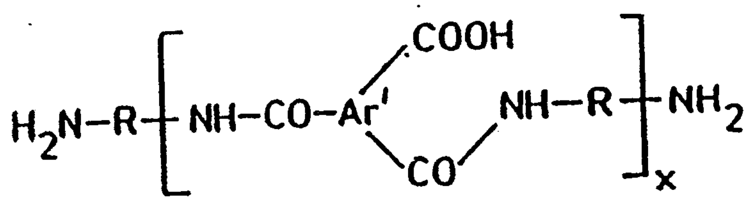

XI

umsetzt,

b) aromatische Tetracarbonsäuren oder deren reaktive Derivate mit Diaminen der allgemeinen Formel X

$H_2N-R-NH_2$ X

zu einem Polyamidsäure-Block der allgemeinen Formel XII

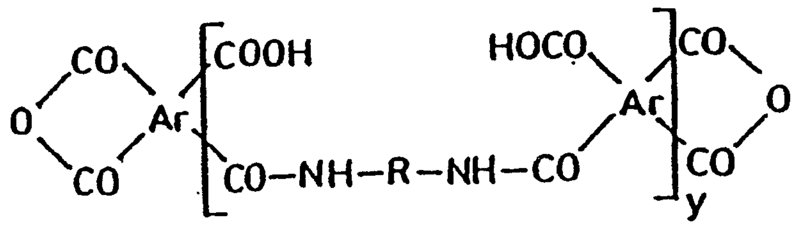

XII

umsetzt,

c) die Polyamidamidsäure-Blöcke der allgemeinen Formel XI

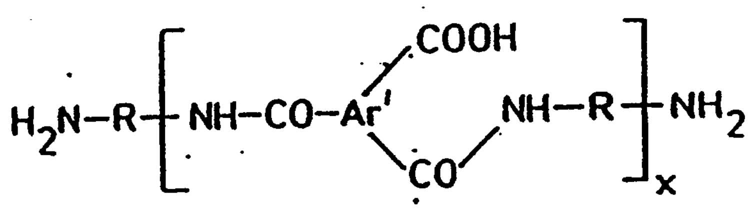

XI

mit den Polyamidsäure-Blöcken der allgemeinen Formel XII

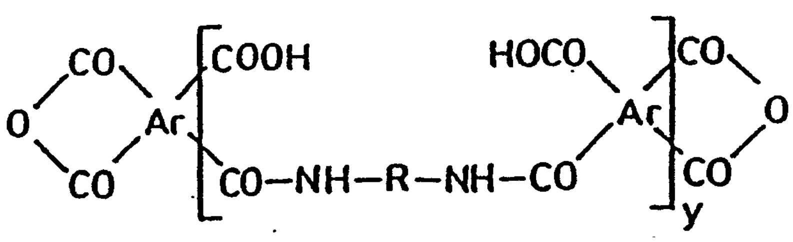

XII

miteinander umsetzt und das zunächst entstehende Polyamidamidsäure-Polyamidsäure-Blockcopolymer chemisch oder thermisch cyclisiert.

6. Verfahren nach Anspruch 5, dadurch gekennzeichnet, daß als Tetracarbonsäurederivat Benzophenontetracarbonsäuredianhydrid verwendet wird.

7. Verfahren nach Anspruch 5, dadurch gekennzeichnet, daß als Tetracarbonsäurederivat Pyromellitsäuredianhydrid verwendet wird.

8. Verfahren nach Anspruch 5, dadurch gekennzeichnet, daß als Tricarbonsäurederivat Trimellitsäureanhydridchlorid verwendet wird.

9. Verfahren nach Anspruch 5, dadurch gekennzeichnet, daß ein Gemisch beliebiger Zusammensetzung von Tetracarbonsäurederivaten, bzw. von Tricarbonsäurederivaten verwendet wird.

10. Verfahren nach Anspruch 5, dadurch gekennzeichnet, daß ein Gemisch von Diaminen beliebiger Zusammensetzung verwendet wird.

**Patentansprüche für folgende Vertragsstaaten : AT, ES**

1. Verfahren zur Herstellung von löslichen und/oder schmelzbaren Polyamidimid-Polyimid-Blockcopolymeren der allgemeinen Formel I

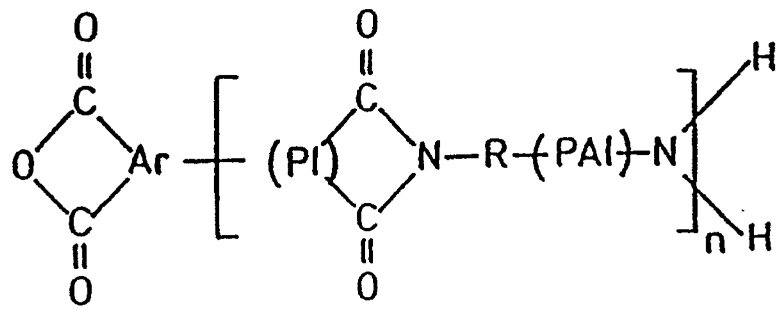

I

worin

n eine ganze Zahl von 1 bis 200,

PAI einen Polyamidimid-Block der allgemeinen Formel II

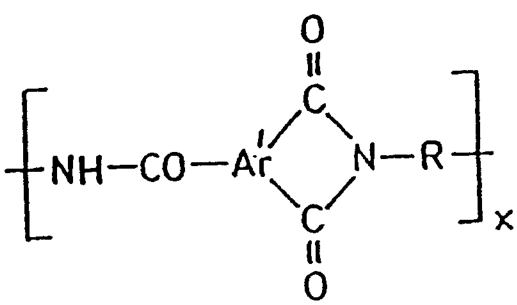

II

und

PI einen Polyimid-Block der allgemeinen Formel III

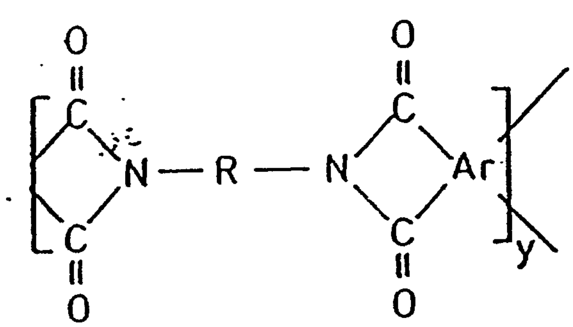

III

darstellen, wobei
x und y unabhängig voneinander eine ganze Zahl von 1 bis 80,
R divalente aromatische Reste der Formeln IV bis IX

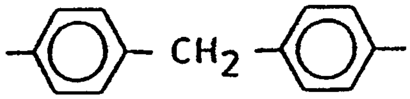

IV

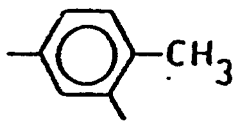

V

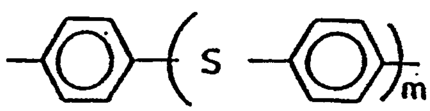

VI

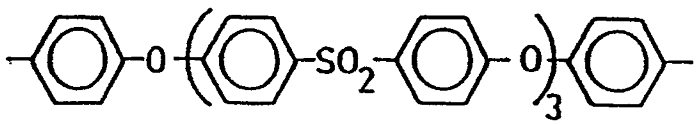

VII

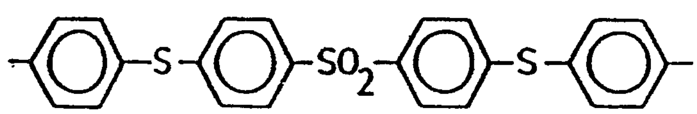

VIII

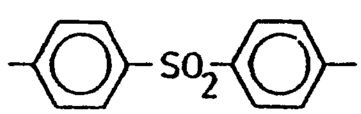

IX

oder Gemische derselben,

Ar tetravalente aromatische Reste
Ar' trivalente aromatische Reste
und
m eine ganze Zahl von 1 bis 4 bedeuten,
dadurch gekennzeichnet, daß man
a) aromatische Tricarbonsäuren oder deren reaktive Derivate mit Diaminen der allgemeinen Formel X

$H_2N\text{-}R\text{-}NH_2$ X

zu einem Polyamidamidsäure-Block der allgemeinen Formel XI

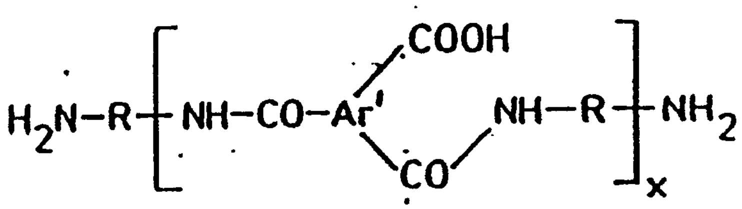
XI

umsetzt,
b) aromatische Tetracarbonsäuren oder deren reaktive Derivate mit Diaminen der allgemeinen Formel X

$H_2N\text{-}R\text{-}NH_2$ X

zu einem Polyamidsäure-Block der allgemeinen Formel XII

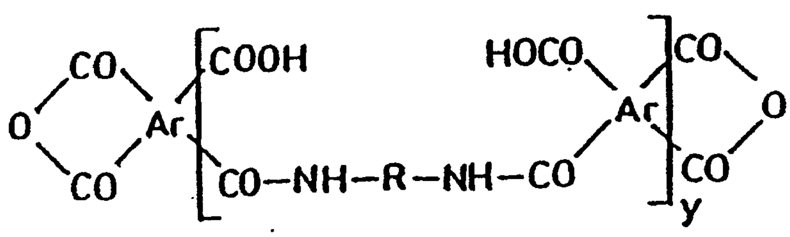
XII

umsetzt,
c) die Polyamidamidsäure-Blöcke der allgemeinen Formel XI

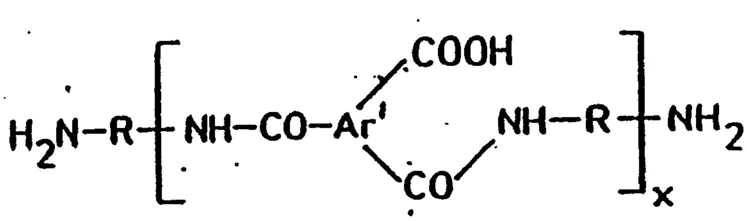
XI

mit den Polyamidsäure-Blöcken der allgemeinen Formel XII

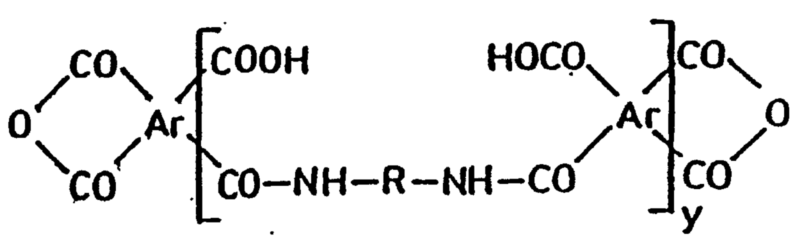
XII

miteinander umsetzt und das zunächst entstehende Polyamidamidsäure-Polyamidsäure-Blockcopolymer chemisch oder thermisch cyclisiert.

2. Verfahren nach Anspruch 1, dadurch gekennzeichnet, daß als Tetracarbonsäurederivat Benzophenontetracarbonsäuredianhydrid verwendet wird.

3. Verfahren nach Anspruch 1, dadurch gekennzeichnet, daß als Tetracarbonsäurederivat Pyromellitsäuredianhydrid verwendet wird.

4. Verfahren nach einem der Ansprüche 1 - 3, dadurch gekennzeichnet, daß als Tricarbonsäurederivat Trimellitsäureanhydridchlorid verwendet wird.

5. Verfahren nach einem der Ansprüche 1 - 4, dadurch gekennzeichnet, daß ein Gemisch beliebiger Zusammensetzung von Tetracarbonsäurederivaten bzw. von Tricarbonsäurederivaten verwendet wird.

6. Verfahren nach einem der Ansprüche 1 - 5, dadurch gekennzeichnet, daß ein Gemisch von Diaminen beliebiger Zusammensetzung verwendet wird.

**Claims**

**Claims for the following Contracting States : BE, CH, DE, FR, GB, GR, IT, LU, NL, SE**

1. Soluble and/or fusible polyamidoimide-polyimide block copolymer of the formula I

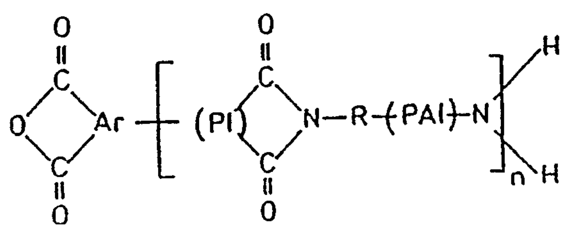

I

wherein n represents an integer from 1 to 200, PAI represents a polyamidoimide block of the formula II

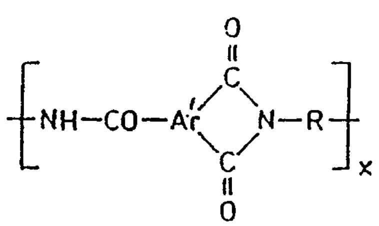

II

and PI represents a polyimide block of the formula III,

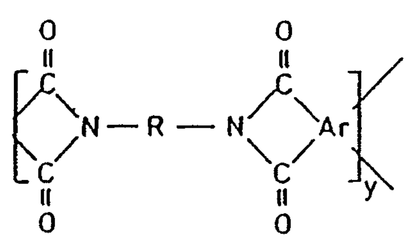

III

wherein x and y independently of one another denote an integer from 1 to 80, R denotes divalent aromatic radicals of the formulae IV to IX

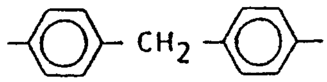

IV

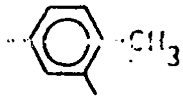

V

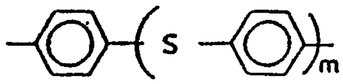

VI

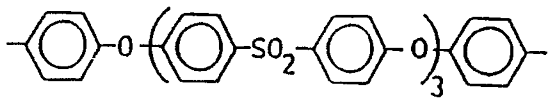

VII

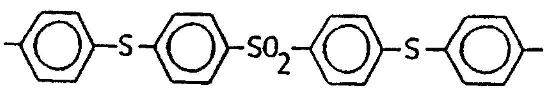

VIII

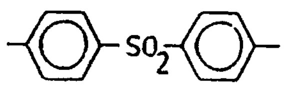

IX

or mixtures thereof, Ar denotes tetravalent aromatic radicals, Ar' denotes trivalent aromatic radicals and m denotes an integer from 1 to 4.

2. Polyamidoimide-polyimide block copolymer according to Claim 1, characterized in that the tetravalent aromatic radicals represent benzophenone radicals.

3. Polyamidoimide-polyimide block copolymer according to Claim 1, characterized in that the tetravalent aromatic radicals represent benzene radicals.

4. Polyamidoimide-polyimide block copolymer according to any of Claims 1 - 3, characterized in that the trivalent aromatic radicals represent benzene radicals.

5. Process for the preparation of a soluble and/or fusible polyamidoimide-polyimide block copolymer of the formula I

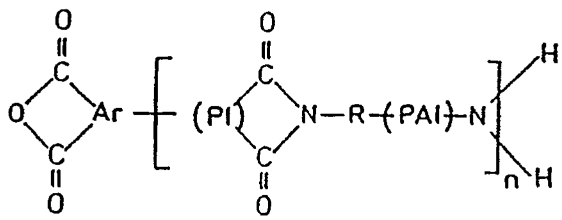

I

wherein n represents an integer from 1 to 200, PAI represents a polyamidoimide block of the formula II

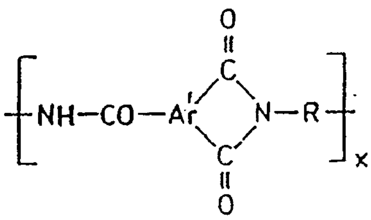

II

and PI represents a polyimide block of the formula III

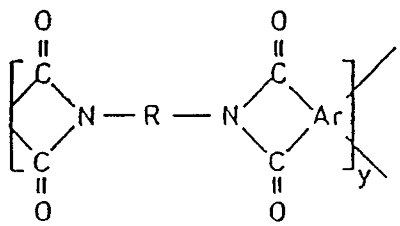

III

wherein x and y independently of one another denote an integer from 1 to 80, R denotes divalent aromatic radicals of the formulae IV to IX

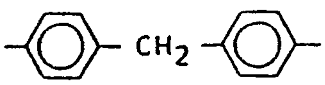

IV

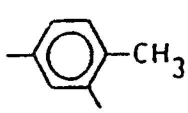

V

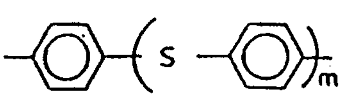

VI

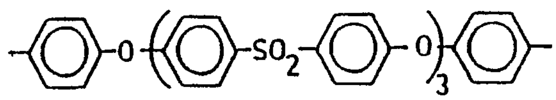

VII

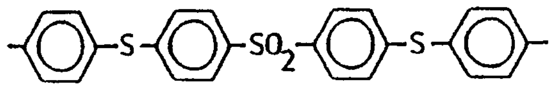

VIII

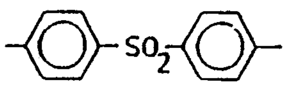

IX

or mixtures thereof, Ar denotes tetravalent aromatic radicals, Ar' denotes trivalent aromatic radicals and m denotes an integer from 1 to 4, characterized in that

a) an aromatic tricarboxylic acid or reactive derivative thereof is reacted with a diamine of the formula X

$H_2N\text{-}R\text{-}NH_2$  X

to give a polyamidoamido acid block of the formula XI,

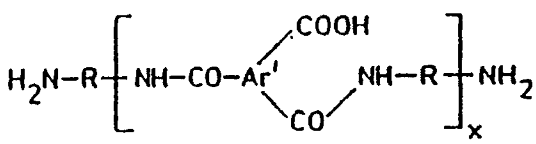

XI

b) an aromatic tetracarboxylic acid or reactive derivative thereof is reacted with a diamine of the formula X

$H_2N\text{-}R\text{-}NH_2$  X

to give a polyamido acid block of the formula XII

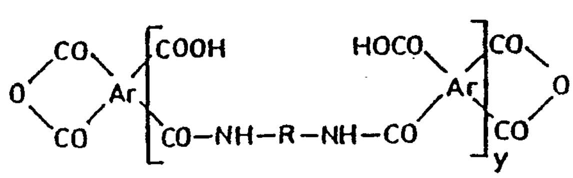

XII

c) the polyamidoamido acid block of the formula XI

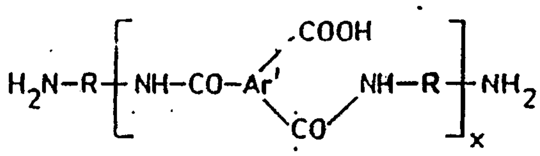

XI

and the polyamido acid block of the formula XII

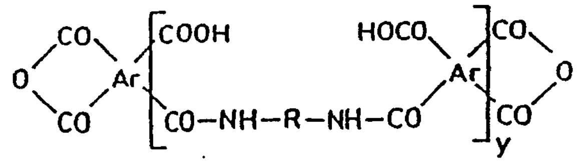

XII

are reacted with one another and the polyamidoamido acid-polyamido acid block copolymer initially formed is subjected to chemical or thermal cyclization.

6. Process according to Claim 5, characterized in that benzophenonetetracarboxylic acid dianhydride is used as the tetracarboxylic acid derivative.

7. Process according to Claim 5, characterized in that pyromellitic dianhydride is used as the tetracarboxylic acid derivative.

8. Process according to Claim 5, characterized in that trimellitic anhydride chloride is used as the tricarboxylic acid derivative.

9. Process according to Claim 5, characterized in that a mixture of tetra- and/or tricarboxylic acid derivatives of any desired composition is used.

10. Process according to Claim 5, characterized in that a mixture of diamines of any desired composition is used.

**Claims for the following Contracting States : AT, ES**

1. Process for the preparation of soluble and/or fusible polyamidoimide-polyimide block copolymer of the formula I

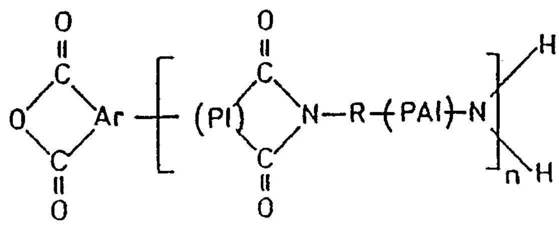

I

wherein n represents an integer from 1 to 200, PAI represents a polyamidoimide block of the formula II

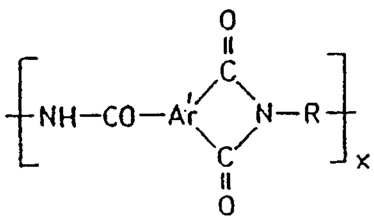

II

and PI represents a polyimide block of the formula III,

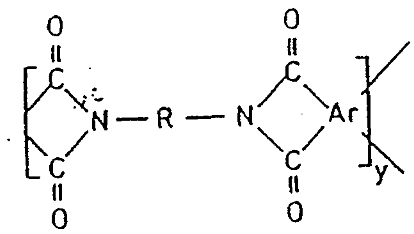

III

wherein x and y independently of one another denote an integer from 1 to 80, R denotes divalent aromatic radicals of the formulae IV to IX

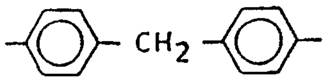

IV

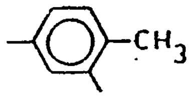

V

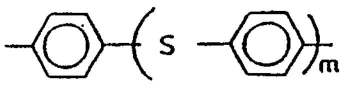

VI

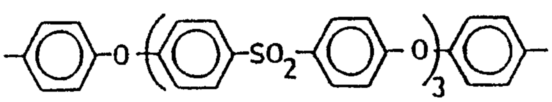

VII

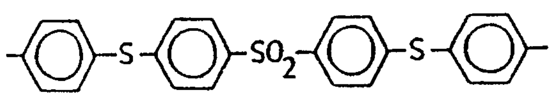

VIII

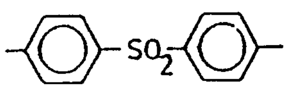

IX

or mixtures thereof, Ar denotes tetravalent aromatic radicals, Ar' denotes trivalent aromatic radicals and m denotes an integer from 1 to 4, characterized in that

a) an aromatic tricarboxylic acid or reactive derivative thereof is reacted with a diamine of the formula X

$H_2N\text{-}R\text{-}NH_2$ X

to give a polyamidoamido acid block of the formula XI,

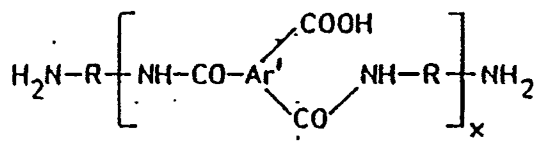 XI

b) an aromatic tetracarboxylic acid or reactive derivative thereof is reacted with a diamine of the formula X

$H_2N\text{-}R\text{-}NH_2$ X

to give a polyamido acid block of the formula XII

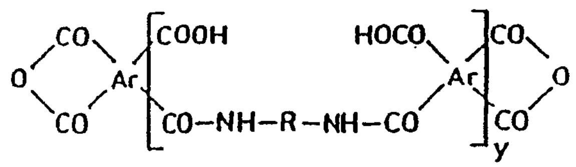 XII

c) the polyamidoamido acid block of the formula XI

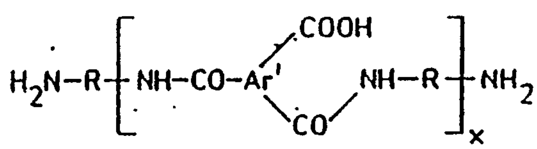 XI

and the polyamido acid block of the formula XII

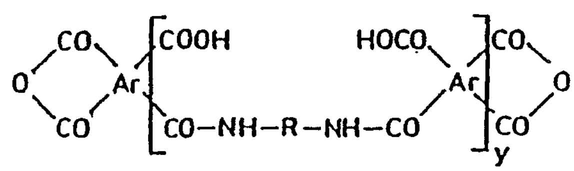 XII

are reacted with one another and the polyamidoamido acid-polyamido acid block copolymer initially formed is subjected to chemical or thermal cyclization.

**2.** Process according to Claim 1, characterized in that benzophenonetetracarboxylic acid dianhydride is used as the tetracarboxylic acid derivative.

**3.** Process according to Claim 1, characterized in that pyromellitic dianhydride is used as the tetracarboxylic acid derivative.

**4.** Process according to any one of Claims 1 - 3, characterized in that trimellitic anhydride chloride is used as the tricarboxylic acid derivative.

**5.** Process according to any one of Claims 1 - 4, characterized in that a mixture of tetra- and/or tricarboxylic acid derivatives of any desired composition is used.

6. Process according to any one of Claims 1 - 5, characterized in that a mixture of diamines of any desired composition is used.

**Revendications**

**Revendications pour les Etats contractants suivants : BE, CH, DE, FR, GB, GR, IT, LU, NL, SE**

1. Copolymères blocs polyamideimide-polyimide solubles et/ou fusibles de formule générale (I) :

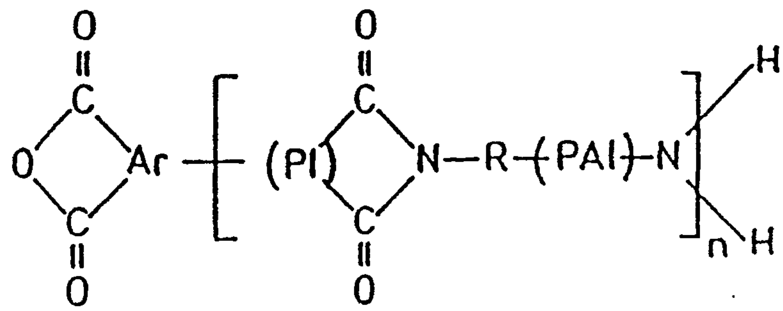

I

dans laquelle
n est un nombre entier de 1 à 200,
PAI est un bloc polyamideimide de formule générale (II) :

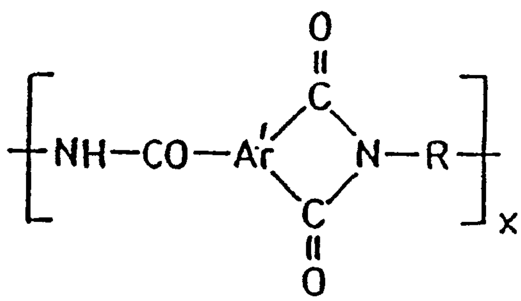

II

PI est un bloc polyimide de formule générale (III) :

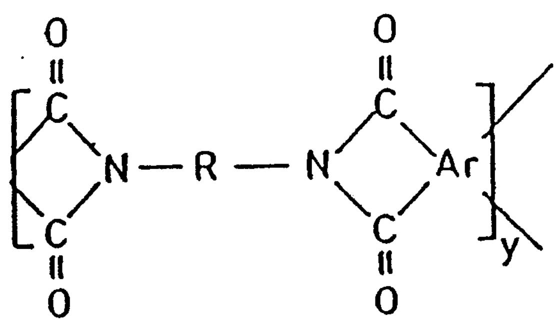

III

et x et y, indépendants l'un de l'autre, représentent un nombre entier compris entre 1 et 80,
R représente des restes aromatiques divalents selon les formules (IV) à (IX) :

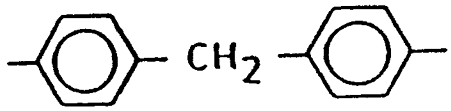

IV

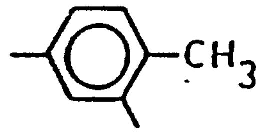

V

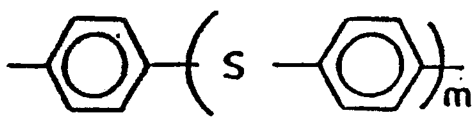

VI

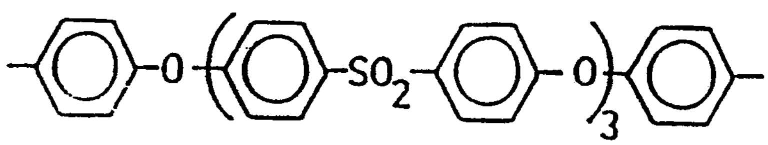

VII

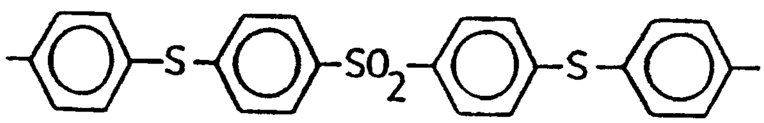

VIII

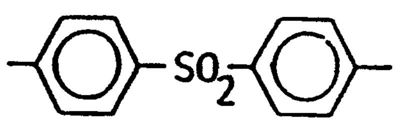

IX

ou un mélange de ceux-ci,
Ar est un reste aromatique tétravalent,
Ar' est un reste aromatique trivalent, et
m est un nombre entier de 1 à 4.

**2.** Copolymères blocs polyamideimide-polyimide selon la revendication 1, caractérisés en ce que les restes aromatiques tétravalents sont représentés par des restes benzophénone.

**3.** Copolymères blocs polyamideimide-polyimide selon la revendication 1, caractérisés en ce que les restes aromatiques tétravalents sont des restes benzèniques.

**4.** Copolymères blocs polyamideimide-polyimide selon l'une des revendications 1 à 3, caractérisés en ce

que les restes aromatiques trivalents sont des restes benzéniques.

5. Procédé de préparation de copolymères blocs polyamideimide-polyimide de formule générale (I) :

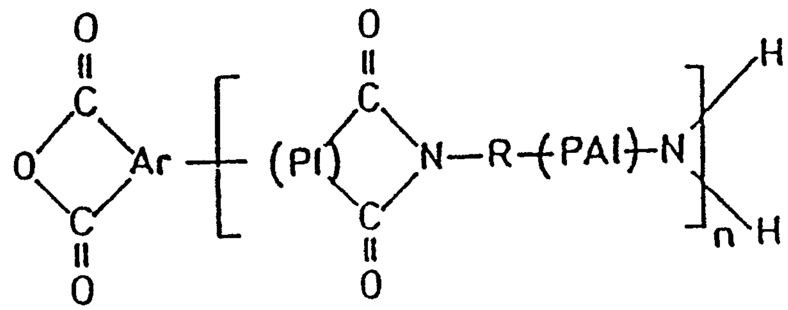

I

dans laquelle
n est un nombre entier compris entre 1 et 200,
PAI est un bloc polyamideimide de formule générale (II):

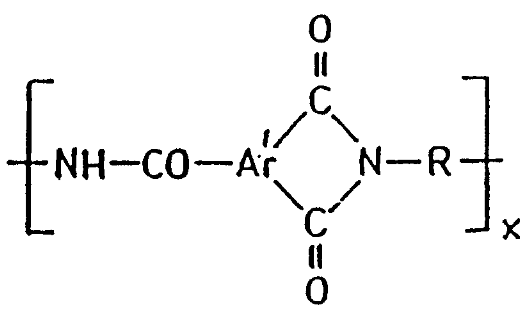

II

et
PI un bloc polyimide de formule générale (III) :

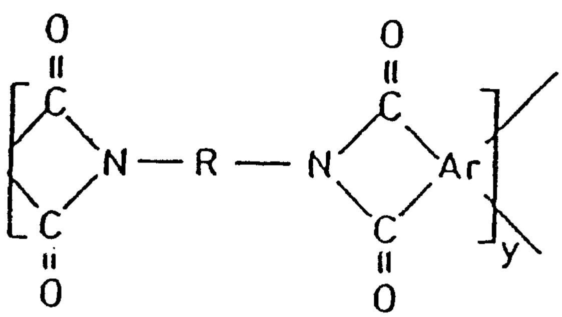

III

où x et y, indépendants l'un de l'autre, représentent un nombre entier compris entre 1 et 80,
R représente les restes aromatiques divalents des formules (IV) à (IX) :

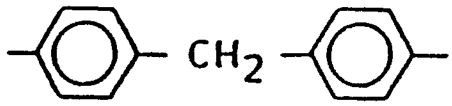

IV

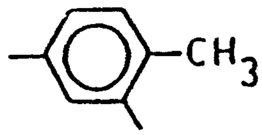

V

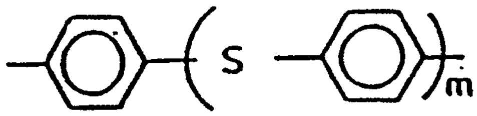

VI

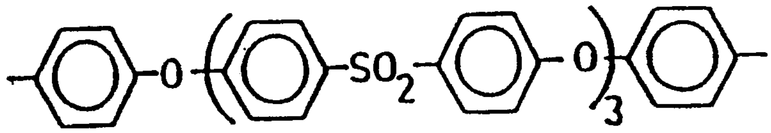

VII

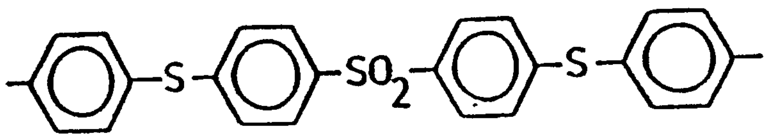

VIII

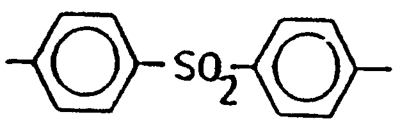

IX

ou un mélange de ceux-ci,
Ar est un reste aromatique tétravalent,
Ar' est un reste aromatique trivalent, et
m est un nombre entier de 1 à 4,
caractérisé en ce que :

(a) on fait réagir des acides tricarboxyliques aromatiques ou leurs dérivés réactifs avec des diamines de formule générale (X) :

$H_2N\text{-}R\text{-}NH_2$ X

en un bloc acide polyamideimide de formule générale (XI) :

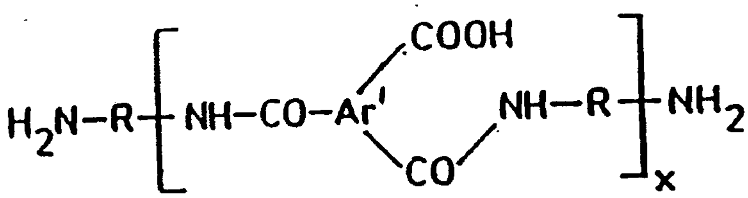

XI

(b) on fait réagir des acides tétracarboxyliques aromatiques ou leurs dérivés réactifs avec des diamines de formule générale (X) :

$H_2N\text{-}R\text{-}NH_2$ X

en un bloc acide polyamide de formule générale (XII) :

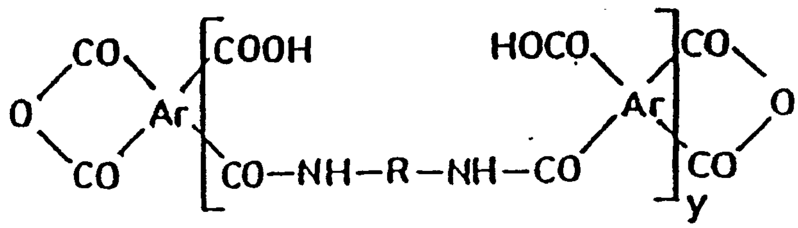

XII

(c) on fait réagir des blocs acide polyamideamide de formule générale (XI) :

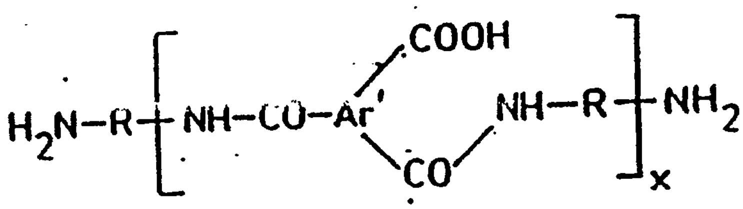

XI

avec des blocs acide polyamide de formule générale (XII) :

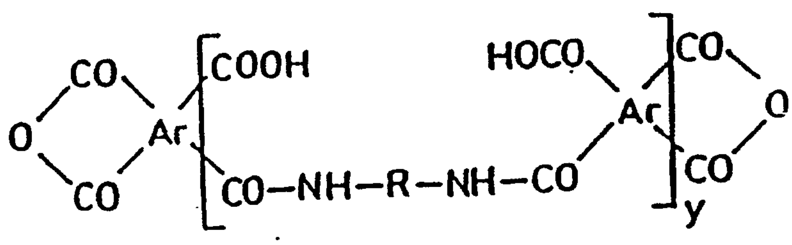

XII

et on réalise une cyclisation chimique ou thermique des copolymères blocs acide polyamideamide-acide polyamide obtenus.

**6.** Procédé selon la revendication 5, caractérisé en ce qu'on utilise le dianhydride d'acide benzophénone tétracarboxylique comme dérivé acide tétracarboxylique.

**7.** Procédé selon la revendication 5, caractérisé en ce qu'on utilise le dianhydride d'acide pyromellitique comme dérivé acide tétracarboxylique.

**8.** Procédé selon la revendication 5, caractérisé en ce qu'on utilise le chlorure d'anhydride acide trimellitique comme dérivé tricarboxylique.

**9.** Procédé selon la revendication 5, caractérisé en ce qu'on utilise un mélange de compositions quelconques de dérivés acide tétracarboxylique ou de dérivés acide tricarboxylique.

**10.** Procédé selon la revendication 5, caractérisé en ce qu'on utilise un mélange de diamines de compositions quelconques.

**Revendications pour les Etats contractants suivants : AT, ES**

**1.** Procédé de préparation de copolymères blocs polyamideimide-polyimide solubles et /ou fusibles de formule générale (I) :

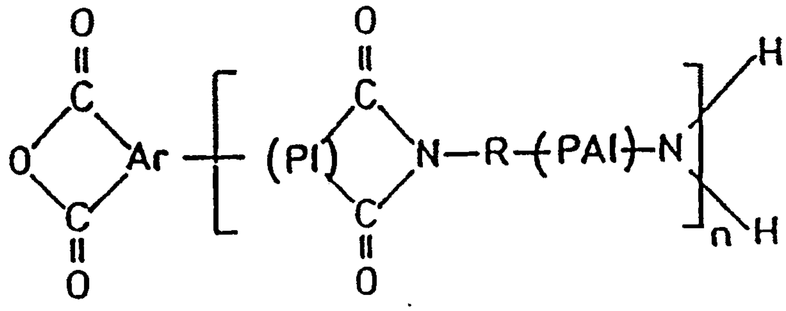

I

dans laquelle
n est un nombre entier compris entre 1 et 200,
PAI est un bloc polyamideimide de formule générale (II):

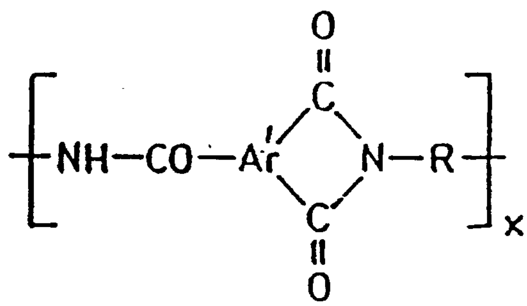

II

et
PI un bloc polyimide de formule générale (III) :

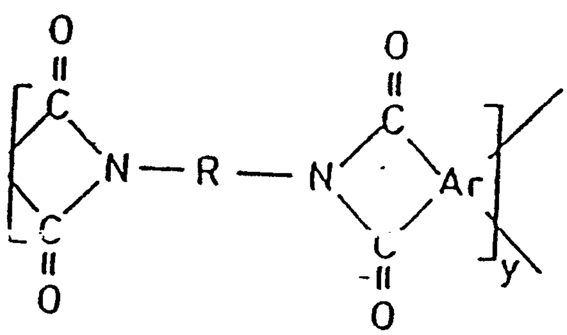

III

où x et y, indépendants l'un de l'autre, représentent un nombre entier compris entre 1 et 80,
R représente les restes aromatiques divalents des formules (IV) à (IX) :

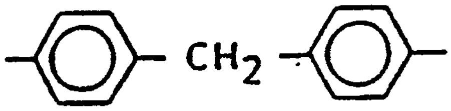

IV

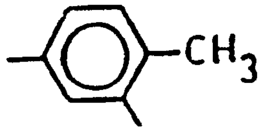

V

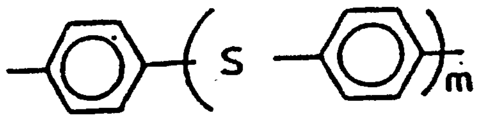

VI

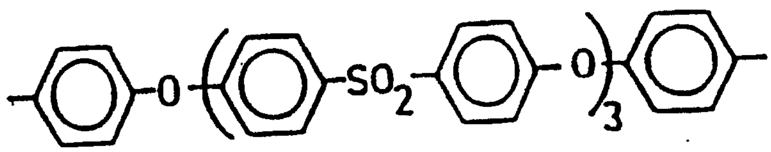

VII

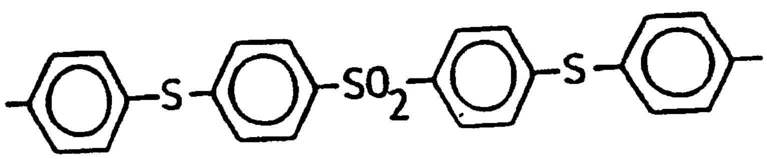

VIII

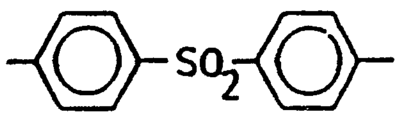

IX

ou un mélange de ceux-ci,
Ar est un reste aromatique tétravalent,
Ar' est un reste aromatique trivalent, et
m est un nombre entier de 1 à 4,
caractérisé en ce que :

(a) on fait réagir des acides tricarboxyliques aromatiques ou leurs dérivés réactifs avec des diamines de formule générale (X) :

$H_2N\text{-}R\text{-}NH_2$    X

en un bloc acide polyamideimide de formule générale (XI) :

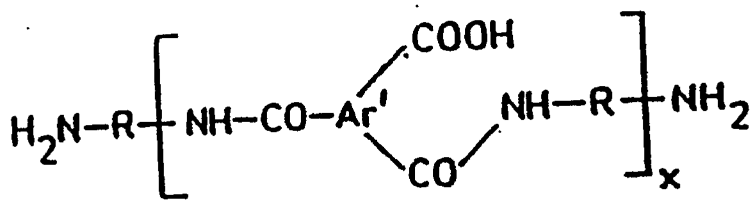

XI

(b) on fait réagir des acides tétracarboxyliques aromatiques ou leurs dérivés réactifs avec des diamines de formule générale (X) :

$H_2N-R-NH_2$ X

en un bloc acide polyamide de formule générale (XII) :

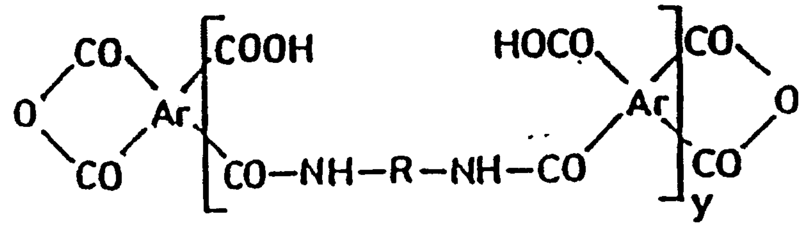

XII

(c) on fait réagir des blocs acide polyamideamide de formule générale (XI) :

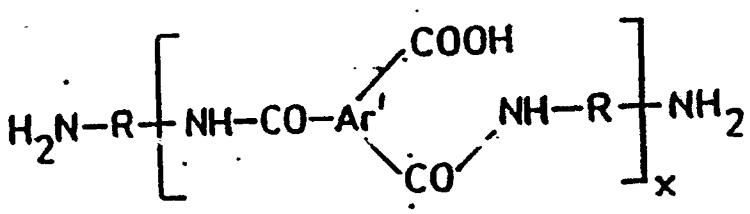

XI

avec des blocs acide polyamide de formule générale (XII) :

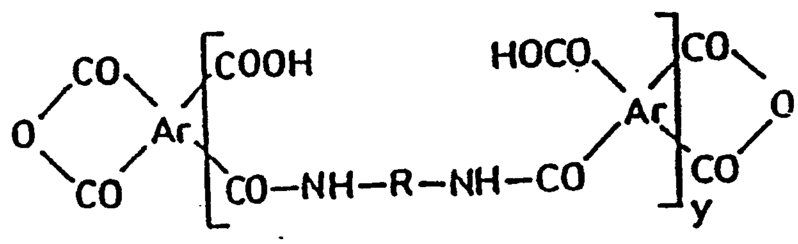

XII

et on réalise une cyclisation chimique ou thermique des copolymères blocs acide polyamideamide-acide polyamide obtenus.

2. Procédé selon la revendication 1, caractérisé en ce qu'on utilise le dianhydride d'acide benzophénone tétracarboxylique comme dérivé acide tétracarboxylique.

3. Procédé selon la revendication 1, caractérisé en ce qu'on utilise le dianhydride d'acide pyromellitique comme dérivé acide tétracarboxylique.

4. Procédé selon l'une des revendications 1 à 3, caractérisé en ce qu'on utilise le chlorure d'anhydride acide trimellitique comme dérivé tricarboxylique.

5. Procédé selon l'une des revendications 1 à 4, caractérisé en ce qu'on utilise un mélange de compositions quelconques de dérivés acide tétracarboxylique ou de dérivés acide tricarboxylique.

6. Procédé selon l'une des revendications 1 à 5, caractérisé en ce qu'on utilise un mélange de diamines de compositions quelconques.

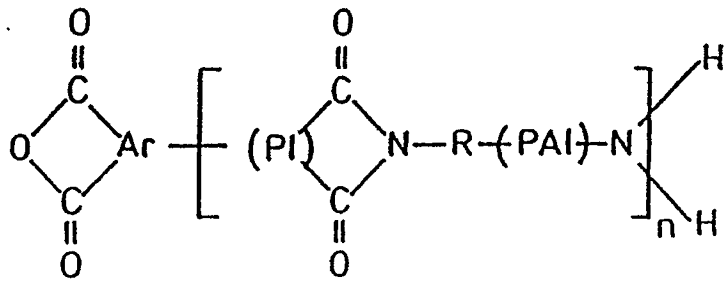

I

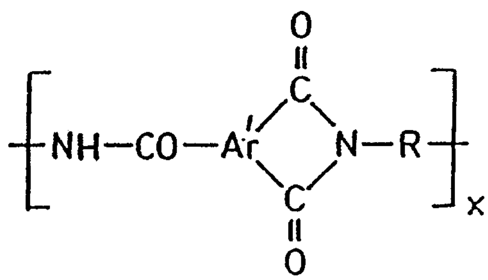

II

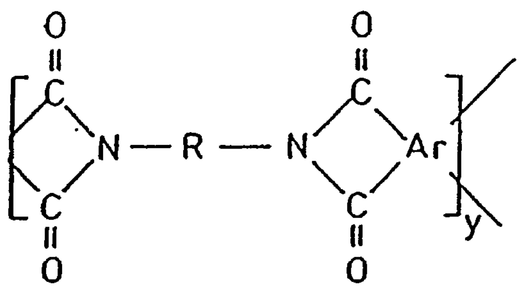

III

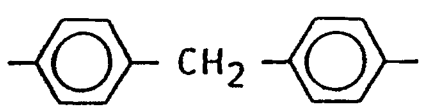

IV

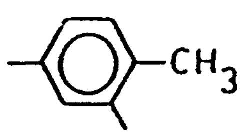

V

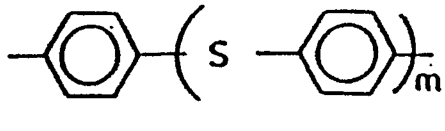

VI

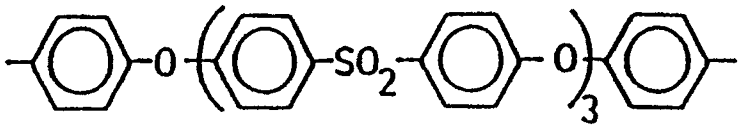

VII

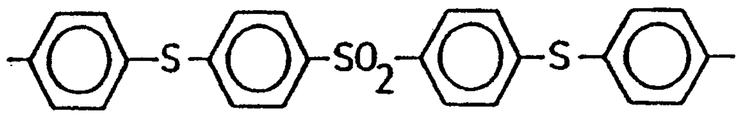

VIII

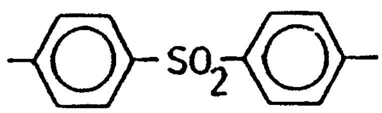

IX

$$H_2N - R - NH_2$$

X

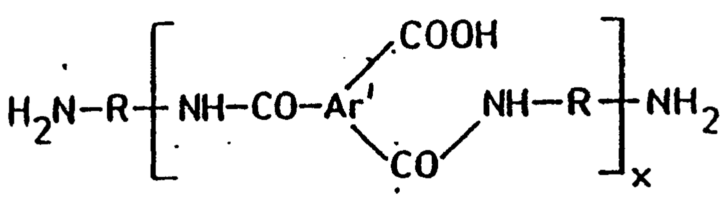

XI

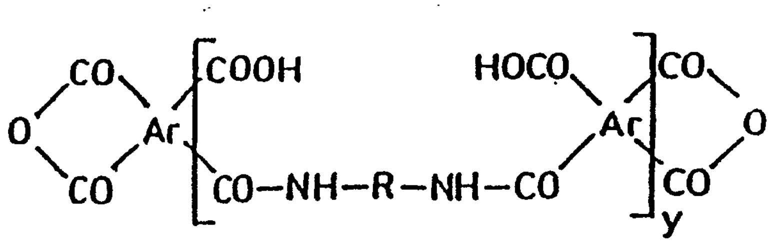

XII